**Europäisches Patentamt**

**European Patent Office**

**Office européen des brevets**

(19)

(11) Veröffentlichungsnummer : **0 091 635 B2**

(12) # NEUE EUROPÄISCHE PATENTSCHRIFT

(45) Veröffentlichungstag der neuen Patentschrift :
18.12.91 Patentblatt 91/51

(51) Int. Cl.$^5$ : **A01D 45/02**

(21) Anmeldenummer : **83103289.1**

(22) Anmeldetag : **05.04.83**

(54) Verfahren und Gerät zum Ernten von Mais oder anderen Körnerfrüchten.

(30) Priorität : **10.04.82 DE 3213542**

(43) Veröffentlichungstag der Anmeldung :
**19.10.83 Patentblatt 83/42**

(45) Bekanntmachung des Hinweises auf die
Patenterteilung :
**30.07.86 Patentblatt 86/31**

(45) Bekanntmachung des Hinweises auf die
Entscheidung über den Einspruch :
**18.12.91 Patentblatt 91/51**

(84) Benannte Vertragsstaaten :
**AT BE CH DE FR GB IT LI LU NL SE**

(56) Entgegenhaltungen :
**DE-A- 1 482 851**
**DE-A- 1 757 213**
**DE-B- 1 180 986**
**DE-B- 2 005 352**
**FR-A- 1 355 815**

(73) Patentinhaber : **Kalverkamp, Klemens**
**Warendorfer Strasse 265**
**W-4730 Ahlen/Westfalen (DE)**

(72) Erfinder : **Kalverkamp, Klemens**
**Warendorfer Strasse 265**
**W-4730 Ahlen/Westfalen (DE)**

(74) Vertreter : **Habbel, Hans-Georg, Dipl.-Ing.**
**Postfach 3429 Am Kanonengraben 11**
**W-4400 Münster (DE)**

EP 0 091 635 B2

## Beschreibung

Die Erfindung betrifft ein Verfahren zum Ernten von Mais oder anderen Körnerfrüchten durch ein Erntegerät, insbesondere ein Vorsatzgerät für einen Mähdrescher, bei dem durch ein Herunterziehen von Pflanzenstengein durch eine Einzugswalze durch einen, von oben gesehen, zur Fahrtrichtung parallelen Pflückspalt eine Trennung der Kolben oder anderen Früchte von der Pflanze erfolgt.

Aus der DE-A-1 757 213 ist ein gattungsbildendes Maiserntegerät bekannt, bei dem ein Einzugswalzenpaar die Maispflanze durch einen Pflückspalt der mittig über dem Einzugswalzenpaar angeordnet ist, hindurchzieht. Hierbei werden die Maiskolben, die den Pflückspalt nicht passieren können, von der Pflanze abgerissen und können von einem Förderer aufgenommen werden. Das bekannte Maiserntegerät ist nachteilig schwer und belastet die Vorderachse des Erntefahrzeugs, an dem es befestigt ist, erheblich.

Aus der DE-A-1 482 851 ist eine Maiserntevorrichtung bekannt, die quer zur Fahrtrichtung angeordnete Pflückspalte aufweist. Dies hat den erheblichen Nachteil, daß hierdurch die Reibung beim Einziehen der Maiserntepflanzen erheblich höher ist als bei in Fahrtrichtung angeordneten Pflückspalten ohne eine seitliche Zwangsbewegung. Das Einziehen der Pflanzen ist in erheblichem Maß durch die Eigenbewegung des Fahrzeugs behindert, so daß sich häufig Betriebsstörungen ergeben.

Es ist Aufgabe der Erfindung das bekannte Maiserntegerät derartig auszugestalten, daß es wesentlich leichter als bisher ausgeführt werden kann und daß gleichzeitig mit dem Erntevorgang eine Zerkleinerung der Maispflanzen vorgenommen wird. Eine gesonderte Zerkleinerungs-vorrichtung wie sie die DE-B-20 05 352 zeigt, soll also nicht mehr notwendig sein. Darüberhinaus soll eine besonders kostengünstig zu fertigende Ausführung angegeben werden, die leicht zu warten und zu reinigen ist und bei der auch angelernte Kräfte, z. B. in Ländern der dritten Welt, eine Reparatur durchführen können.

Die Hauptaufgabe wird dadurch gelöst, daß die Pflanze nur einseitig erfaßt mittels nur einer Einzugswalze durch den Pflückspalt heruntergezogen wird und daß die Pflanze durch die Einzugswalze gegen feststehende Zerkleinerungsmesser, die in entsprechende Schlitze der Einzugswalze hineinragen, geführt und dadurch zerkleinert werden. Durch eine nur einseitige Erfassung der Pflanze zum Durchziehen durch den Pflückspalt ergibt sich eine überraschenderweise funktionierende, besonders einfache und leichte Konstruktion, die den bisherigen funktions- und kostenmäßig weit überlegen ist. Die Zahl der notwendigen Einzugswalzen und ihrer Antriebe wird vorteilhaft halbiert.

Außerdem ergibt sich besonders vorteilhaft die Möglichkeit, ohne zusätzliche Arbeitsvorrichtung, Maisfelder o. ä. vollständig abzuernten und sowohl die Körnerfrüchte, wie Maiskolben, als auch die Pflanzen selbst, z. B. für Viehfutter, zu gewinnen, da erfindungsgemäß die Pflanze auch zerkleinert wird.

In Ausgestaltung der Erfindung ist vorgesehen, daß die Zekleinerung in Schrägrichtung der hindurchgezogenen Pflanze erfolgt. So ergibt sich eine besonders günstige Arbeitsweise, da die Schnittkräfte geringer sind als bei einer Zerkleinerung in Querrichtung der Pflanze.

Zur Durchführung des erfindungsgemäßen Verfahrens ist ein Erntegerät zum Ernten von Mais oder anderen Körnerfrüchten vorgesehen, das insbesondere als Vorsatzgerät für einem Mähdrescher ausgebildet ist und mit einer Einzugsvorrichtung und einem, von oben gesehen, zur Fahrtrichtung parallelen Pflückspalt zur Trennung der Kolben oder anderen Früchte von der Pflanze versehen. Es ist dadurch gekennzeichnet, daß das Vorsatzgerät je Pflanzenreihe nur eine, von oben gesehen, zur Fahrtrichtung parallele Einzugswalze mit eine sich vom Pflückspalt ausgehend nach unten ertreckenden Teilummantelung aufweist, wobei die Teilummantelung, vorzugsweise unten, feststehende Zerkleinerungs messer zur Zerkleinerung der Pflanze aufweist, die in entsprechende Schlitze der Einzugswalze hineinragen. Vorteilhaft erfolgt gleichzeitig mit dem Erntevorgang eine Zerkleinerung der Pflanzen. Nicht nur die Früchte, sondern auch die Pflanze selbst können so, z. B. für Silozwecke gewonnen werden. Die Verwendung eines gesonderten Schneidaggregates erübrigt sich, so daß auch in diesem Fall das Erntegerät erheblich kleiner und leichter als bisher üblich ausgeführt werden kann.

In weiterer Ausgestaltung der Erfindung ist vorgesehen, daß die Teilummantelung oben eine Brechkante, insbesondere in Form eines Rundeisens aufweist und daß gegenüber der Brechkante ein Führungsblech angeordned ist. So ergibt sich ein Pflückspalt, der sowohl für eine einwandfreie Führung der Pflanze bei dem Pflückvorgang als auch für ein einwandfreies Brechen der Kolbenstiele sorgt. Durch die Verwendung eines Rundeisens ergibt sich eine hohe Lebensdauer der Brechkante und durch das Führungsblech ist eine einwandfreie Einstellung, z. B. auf besonders dünne oder besonders dicke Pflanzen möglich. Unter allen Umständen kann erreicht werden, daß ein einwandfreier Erntevorgang möglich ist und daß das Ernteergebnis bezüglich des Ausbringens über dem bisher Bekannten liegt.

In weiterer Ausgestaltung der Erfindung ist vorgesehen, daß die Teilummantelung an ihrem unteren. Ende eine Einstellschraube zur Einstellung des Spaltes zwischen Einzugswalze und Teilummantelung aufweist. Auch hierdurch ist eine Anpassung an die jeweiligen Verhältnisse, z. B. ob trockene Pflanzen oder sehr feuchte Pflanzen geerntet werden sollen, möglich. Des weiteren ist es vorteilhaft möglich, den auftretenden Verschleiß

2

auszugleichen.

In weiterer Ausgestaltung der Erfindung ist vorgesehen, daß das Vorsatzgerät einzugskettenlos ausgebildet ist. Eine vorteilhafte weitere Gewichts- und Kosteneinsparung ist möglich. In weiterer Ausgestaltung der Erfindung ist vorgesehen, daß das Vorsatzgerät eine insbesondere unter einer Kolbenförderschnecke angeordnete Fangvorrichtung mit einer Förderschnecke für zerkleinerte Pflanzenteile aufweist. So ergibt sich eine vorteilhafte Trennung der einzelnen Transportwege für die Früchte und die Pflanze, die es erlaubt, die Transportwege sowohl für die Früchte als auch für die Pflanze optimal auszugestalten. Das Erntegerät weist in dieser Ausführung einen Winkel von ca. 20° gegenüber dem Erdboden auf. Dieser Winkel ist zwar größer als der mit dem erfindungsgemäßen Gerät in Normalausführung eingehaltene 15° Winkel. Es hat sich jedoch gezeigt, daß die nachteilige Wirkung der größeren Neigung für das Ernteergebnis durch die Vorteile der Fangvorrichtung aufgewogen wird.

In weiterer Ausgestaltung der Erfindung ist vorgesehen, daß das Erntegerät Einzugsrotoren, insbesondere aus Kunststoff, für das Einziehen von auf dem Eidboden liegenden Mais aufweist. Solche Einzugsrotoren nehmen vorteilhaft den auf dem Erdboden liegenden Mais auf und heben ihn soweit an, daß er von der Einzugswalze in den Pflückspalt eingezogen werden kann. Dann erfolgt das weitere Durchziehen unter gleichzeitigem weiteren Anheben der Pflanze von selbst. So wird das bisher ungelöste Problem des Erntens von auf dem Erdboden liegenden Mais, z. B. wenn dieser zu feucht geworden ist oder durch Hagelschlag niedergebrochen wurde, gelöst. Es ist lediglich notwendig für diesen Spezialfall das Erntegerät mit den entsprechenden Einzugsrotoren auszurüsten. Dies kann leicht und einfach durch ein Aufstecken der Einzugsrotoren und ihrer Halterung geschehen.

In weiterer Ausgestaltung der Erfindung ist vorgesehen, daß die Einzugskette den Einzugsrotor mitantreibt. Durch einen Antrieb über die Einzugskette ergibt sich eine vorteilhaft einfach Antriebsart für den Einzugsrotor.

In weiterer Ausgestaltung der Erfindung ist vorgesehen, daß die Einzugswalzen mit den jeweiligen Pflückspalten annähernd vertikal angeordnet sind. Überraschenderweise ist es möglich nicht nur mit liegenden Einzugswalzen, sondern auch mit stehenden zu arbeiten. Dies ist insbesondere für das Ernten von Sonnenblumen von Vorteil.

In weiterer Ausgestaltung der Erfindung ist vorgesehen, daß die Einzugswalze schraubenförmig ausgebildete Einzugsgänge aufweist. Hierdurch ergibt sich vorteilhaft, daß das Auftreten von Drehmomentspitzen vermieden werden kann. Eine stoßartige Belastung der Antriebselemente etc. entfällt, so daß diese leichter ausgebildet werden können. Darüberhinaus ergibt sich ein gleichmäßigeres Arbeiten ohne Schwingungen.

In weiterer Ausgestaltung der Erfindung ist vorgesehen, daß das Vorsatzgerät modulartig aufgebaut ist, wobei die Modulbreite durch Zwischenstücke auf den Reihenabstand der Pflanzen einstellbar ist. So ergibt sich eine universelle Einsetzbarkeit.

Die Erfindung wird in Zeichnungen in einer bevorzugten Ausführungsform gezeigt, wobei aus den Zeichnungen weitere vorteilhafte Einzelheiten der Erfindung entnehmbar sind. Die Zeichnungen zeigen im einzelnen :

Figur 1 Ein Erntegerät mit längsliegenden Pflückspalten vor einem Erntefahrzeug,

Figur 2 Ein Erntegerät mit längsliegenden Pflückspalten, bei dem die Reparatur- und Transportstellung angedeutet ist,

Figur 3 Ein Erntegerät mit längsliegendem Pflückspalt und Einzugsrotor für Lagermais,

Figur 4 Einen Querschnitt durch eine Einzugswalze mit einer Teilummantelung und mit schematisch angedeutetem Antrieb.

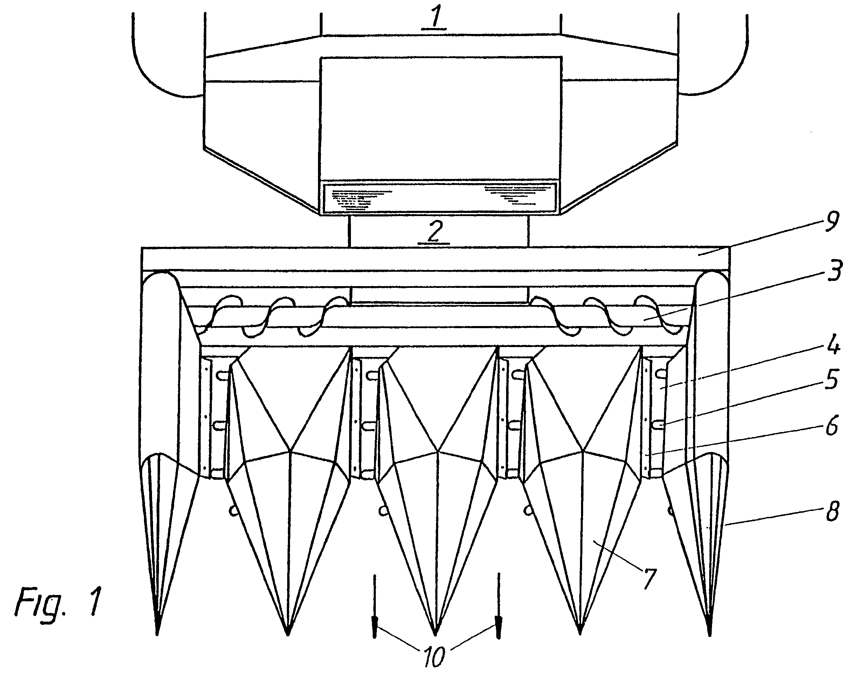

In Fig. 1 bezeichnet 1 das Erntefahrzeug, z. B. ein Mähdrescher, an dessen Vorderseite das Erntegerät 9 befestigt ist. Der Verbindung zwischen dem Fahrzeug 1 und dem Erntegerät 9 dienen nicht gezeigte Streben etc. Zwischen dem Erntegerät 9 und dem Erntefahrzeug 1 ist der Schrägförderer 2 angeordnet. Vor dem Schrägförderer 2 befindet sich die Kolbenförderschnecke 3, die gegenläufig wirkt. Das Erntegerät 9 besteht aus den Außenteilern 8 und den Mittenteilern 7, die zwischen den Reihen des zu erntenden Gutes, z. B. zwischen den Reihen der Maispflanzen, hindurchgeführt werden. 5 bezeichnet die Förderketten für die Früchte und 6 das Abstreifblech des Pflückspalts 4. Die Fahrtrichtung ist durch die beiden Bewegungspfeile 10 angedeutet. Wie ersichtlich, sind die Mitten- und Außenteiler 7 und 8 relativ lang und weisen sowohl Spitzen- als auch Mittelteile auf.

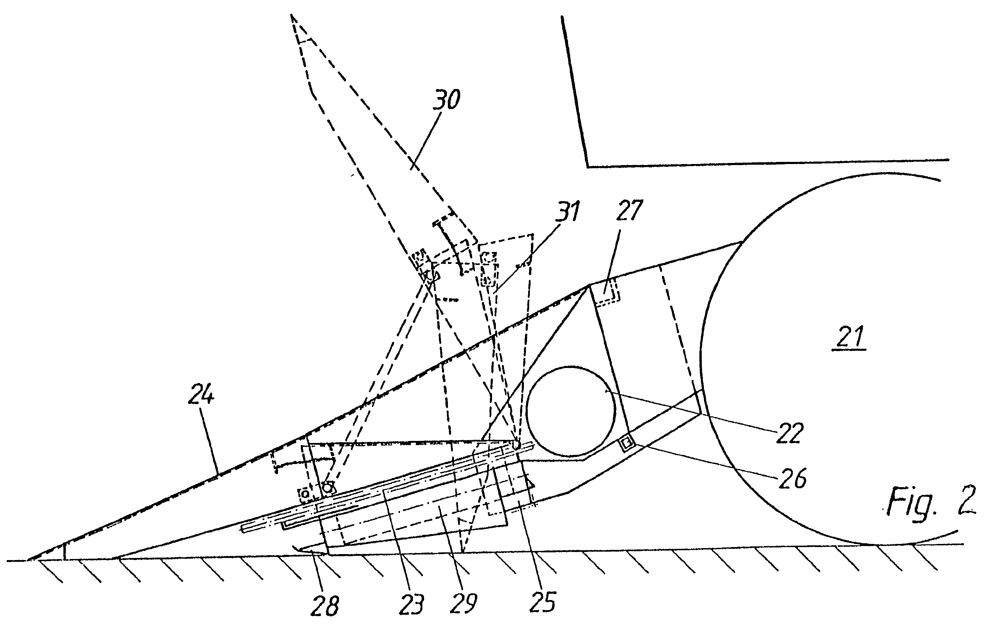

In Fig. 2 bezeichnet 21 die Vorderachse des Erntefahrzeuges, an dem über Träger 25, 26 und 27 das Erntegerät befestigt ist. Die Kolbenförderschnecke 22 befindet sich hinter dem Pflückspalt 23 mit der Einzugswalze 29 und fördert die abgestreiten Früchte.

Die Spitze 24 ist vorteilhaft für Montage- und Reparaturarbeiten in die Lage 30 hochstellbar und für Transportzwecke in die Lage 31 zusammenklappbar.

Zur Führung auf der Erde dient der Schuh 28, der stabil mit der vorderen Lagerung der Einzugswalze 29 und dem Rahmen für die Einzugskette verbunden ist.

Unter der Kolbenförderschnecke 3, 22, ein Versatz nach vorn oder hinten ist aber möglich, befindet sich eine weitere Förderschnecke für die Aufnahme der zerteilten Pflanzen.

Die zerkleinerten Pflanzen werden in einem Fangkorb gesammelt und durch eine weitere Förderschnecke dem Erntefahrzeug zugeführt, wo sie z. B. durch eine pneumatische Fördervorrichtung auf einen Erntewagen befördert werden.

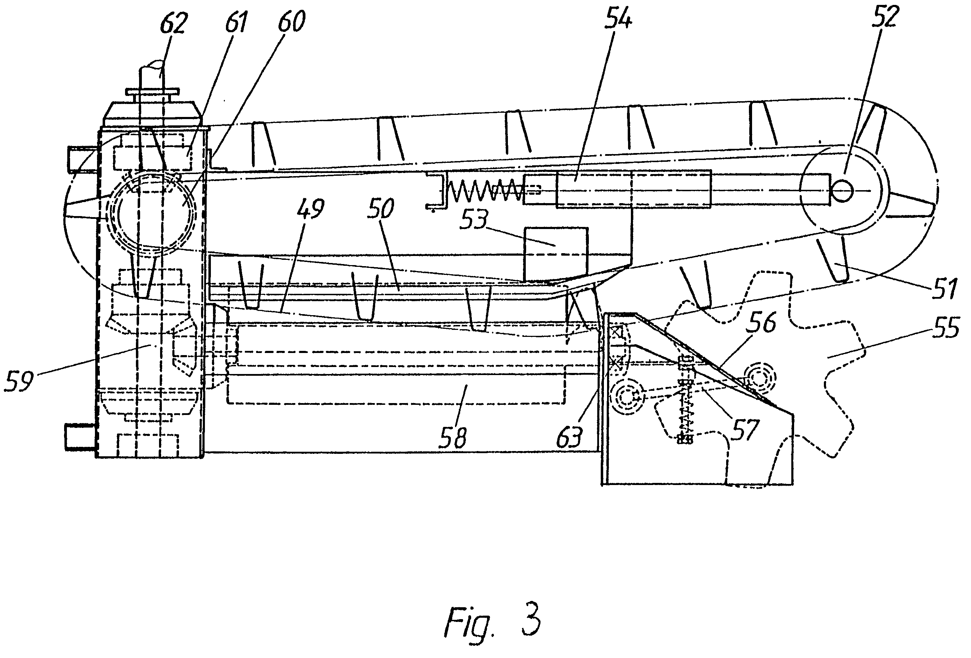

In Fig. 3 bezeichnet 50 die Brechkante in Form eines Rundeisens über der Teilummantelung. Über dem hier längsliegenden Pflückspalt 49 befindet sich die Einzugskerte 51, die über das Kettenrad 52 läuft und durch den Ketterführungsblock 53 gespannt und schräg zum Pflückspalt 49 geführt wird. Die Spannung der notwendigen Antriebskette erfolgt über die Spannvorrichtung 54.

Zur Aufnahme von auf dem Boden liegenden Mais, sogenannten Lagermais, dient der Einzugsrotor 55, der wahlweise angebracht werden kann und über den Schwenkarm 57 an die Führungs-spitze 56 angedrückt wird. Zum Antrieb der Einzugswalze 58 dient das strichliert dargestellte Kegelradgetriebe 59, während die Einzugskette 51 über das Kettenrad 60 angetrieben wird. Der Antrieb von Einzugswalze 58 und Einzugskette 51 erfolgt über Rutschkupplungen 61, die verhindern, daß bei dem Einlauf eines Fremdkörpers, z. B. eines Steines, ein größerer Schaden entsteht. So ergibt sich ein betriebssicheres System, das auch auf schwierigen Böden und steinigen Ackern eingesetzt werden kann.

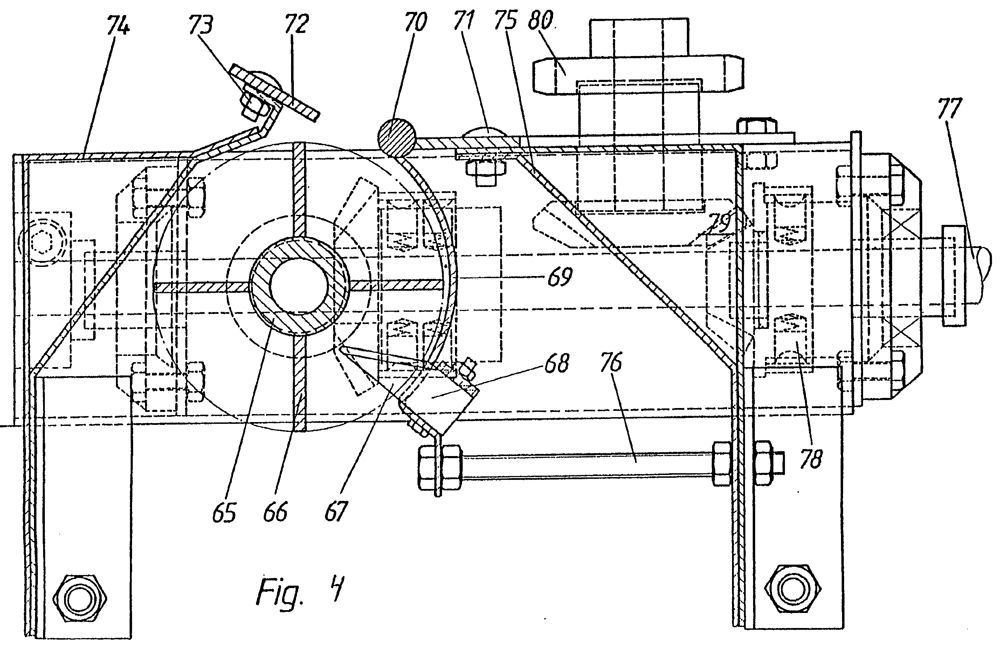

In Fig. 4 bezeichnet 65 die hohle Welle der Einzugswalze mit den Flügeln 66. Die Flügel sind vorzugsweise auf die hohle Welle 65 aufgeschweißt, so daß sich eine sehr günstige kostensparende Ausführung ergibt. Die Flügel 66 weisen Schlitze auf, die in der Zeichnungsebene verlaufen und in die die Zerkleinerungsmesser 67, die mit Befestigungen 68 an der Teilummantelung 69 befestigt sind, eingreifen. So ergibt sich die Möglichkeit, leicht und einfach und in bisher unerreicht günstiger Weise die abgeernteten Pflanzen zu zerkleintern, um sie z. B. einem Silo zuzuführen oder um das spätere Pflügen zu erleichtern.

Die Teilummantelung 69 trägt an ihrem oberen Ende die brechkante 70, vorzugsweise in Form eines Rundeisens. Die Einstellung der Teilummantelung 69 erfolgt über Schrauben 71, die in Langlöcher eingreifen und über untere Einstellschrauben 76. So ist es möglich, einen optimalen Spalt zwischen den Flügeln 66 und der Teilummantelung 69 einzustellen. Sowohl trockener Mais als auch feuchter Mais kann optimal geerntet werden. Über der Einzugswalze befindet sich noch das Führungsblech 72, das ebenfalls über Langlöcher und Schrauben 73 einstellbar ist. So kann auch der Pflückspalt in seiner Breite ohne weiteres verstellt werden. Das Führungsblech 72 ist an dem Träger 74 angeordnet, der vorzugsweise als Dreiecksträger ausgebildet ist. Die Brechkante 70 ist mit dem Träger 75 durch die Verschraubung 71 verbunden. Dieser ist ebenfalls vorzugsweise als Dreiecksträger ausgebildet. Der Antrieb der Einzugswalse erfolgt über die Antriebswelle 77, von der über ein Kegelradgetriebe 79 das Kettenantriebsrad 80 für die Einzugskette angtrieben wird. Zwischen der Antriebswelle 77 und der Einzugswalze bzw. dem Kettenantriebsrad 80 ist die Rutschkupplung 78 angeordnet, die bereits in Fig. 3 erwähnt wurde.

Das erfindungsgemäße Erntegerät ist insbesondere für das Ernten von Mais bestimmt. Es kann jedoch ebenso für das Ernten anderer Körnerfrüchte, z. B. Sonnenblumen, verwendet werden. Es bietet gegenüber den herkömmlichen Geräten eine erhebliche Gewichts- und Kostenersparnis. Weiterhin bietet es den Vorteil eines schonenden Fflückvorganges. Es ist sowohl, wie in den Figuren 1 und 2 gezeigt als Vorsatzgerät für z. B. einen Mähdrescher geeignet als auch als Vorderteil eines Spezialerntegerätes. Die erfindungsgemäßen Vorteile bleiben in allen Fällen erhalten.

## Patentansprüche

1. Verfahren zum Ernten von Mais oder anderen Körnerfrüchten durch ein Erntegerät (9), insbesondere ein Vorsatzgerät für einen Mähdrescher (1), bei dem durch ein Herunterziehen von Pflanzenstengeln durch eine Einzugswalze durch einen, von oben gesehen, zur Fahrtrichtung parallelen Pflückspalt (4, 23, 49) eine Trennung der Kolben oder anderen Früchte von der Pflanze erfolgt, dadurch gekennzeichnet, daß die Pflanze nur einseitig erfaßt mittels nur einer Einzugswalze (29, 58, 66) durch den Pflückspalt (4, 23, 49) heruntergezogen wird und daß die Pflanze durch die Einzugswalze (29, 58, 66) gegen festehende Zerklienerungsmesser (67), die in entsprechende Schlizte der Einzugswalze (29, 58, 66) hineinragen, geführt und dadurch zerkleinert wird.

2. Verfahren nach Anspruch 1, dadurch gekennzeichnet, daß die Zerkleinerung in Schrägrichtung der heruntergezogenen Pflanze erfolgt.

3. Erntegerät zum Ernten von Mais oder anderen Körnerfrüchten, das insbesondere als Vorsatzgerät für einen Mähdrescher (1) ausgebildet ist, mit einer Einzugsvorrichtung und einem, von oben gesehen, zur Fahrtrichtung parallelen Pflückspalt (4, 23, 49) zur Trennung der Kolben oder anderen Früchte von der Pflanze, zur Durchführung des Verfahrens nach einem der Ansprüche 1 und 2, dadurch gekennzeichnet, daß das Vorsatzgerät je Pflanzenreihe nur eine, von oben gesehen, zur Fahrtrichtung parallele Einzugswalze (29, 58, 66) mit eine sich vom Pflückspalt (4, 23, 49) ausgehend nach unten erstreckenden eilummantelung (50, 69) aufweist, wobei die Teilummantelung (50, 69) vorzugsweise unten, feststehende Zerkleinerungsesser (67) zur Zerkleinerung der Pflanze aufweist, die in entsprechende Schlitze der Einzugswalze (29, 58, 66) hineinragen.

4. Erntegerät nach Anspruch 3, dadurch gekennzeichnet, daß die Teilummantelung (50, 69) oben eine Brechkante (70), insbesondere in Form eines Rundeisens aufweist und daß gegenüber der Brechkante ein Führungsblech (72) angeordnet ist.

5. Erntegerät nach Anspruch 3 oder 4, dadurch gekennzeichnet, daß die Teilummantelung (50, 69) an ihrem unteren Ende eine Einstellschraube (76) zur Einstellung des Spaltes zwischen Einzugswalze (29, 58, 66) und Teilummantelung (50, 69) aufweist.

6. Erntegerät nach Anspruch 3, 4 oder 5, dadurch gekennzeichnet, daß das Erntegerät einzugskettenlos ausgebildet ist.

7. Erntegerät nach Anspruch 3, 4, 5 oder 6 dadurch gekennzeichnet, daß das Erntegerät eine insbesondere unter eine Kolbenförderschnecke (3, 22) angeordnete Fangvorrichtung mit einer Förderschnecke für zerkleinerte Pflanzenteile aufweist.

8. Erntegerät nach Anspruch 3, 4, 5, 6 oder 7, dadurch gekennzeichnet, daß das Erntegerät in einem Winkel von ca. 15° gegenüber dem Erdboden geneigt ist.

9. Erntegerät nach Anspruch 3, 4, 5, 6, 7 oder 8, dadurch gekennzeichnet, daß das Erntegerät Einzugsrotoren (55), insbesondere aus Kunststoff für das Einziehen von auf dem Erdboden liegenden Mais aufweist.

10. Erntegerät nach Anspruch 3, 4, 5, 7, 8 oder 9, dadurch gekennzeichnet, daß das Erntegerät eine Einzugskette (5, 51) aufweist, die den Einzugsrotor (55) mitantreibt.

11. Erntegerät nach Anspruch 3, 4, 5, 6, 7, 8, 9 oder 10 dadurch gekennzeichnet, daß die Einzugswalzen (29, 58, 66) mit den jeweiligen Pflückspalten annähernd vertikal angeordnet sind.

12. Erntegerät nach Anspruch 3, 4, 5, 6, 7, 8, 9, 10 oder 11, dadurch gekennzeichnet, daß die Einzugswalzen (29, 58, 66) schraubenförmig ausgebildete Einzugsgänge aufweisen.

13. Erntegerät nach Anspruch 3, 4, 5, 6, 7, 8, 9, 10, 11 oder 12, dadurch gekennzeichnet, daß das Erntegerät modulartig aufgebaut ist, wobei die Modulbreite durch Zwischenstücke auf den Reihenabstand der Pflanzen einstellbar ist.

## Claims

1. A process for harvesting maize or other grain with a harvesting device (9), especially with an attachable device for a combine harvester (1), which allows the separation of the cobs or other fruit from the plant by pulling them down from the stalks by means of one draw-in roller through a cutting slot (4, 23, 49) which extends parallel with respect to the driving direction, viewed from above, characterized in that the plant is seized by only one draw-in roller (29, 58, 66) only on one side, and drawn down through the cutting slot (4, 23, 49) and that the plant is drawn by means of the draw-in roller against non-moving cutting blades (67) which extend into the corresponding slot of the draw-in roller (29, 58, 66) and is thereby cut up.

2. A process according to claim 1, characterized in that the cutting is performed in the inclined direction of the pulled down plant.

3. A harvester for harvesting maize or other grain, which is preferably designed as an attachable device for a combine harvester (1), comprising a draw-in unit and a picking slot (4, 23, 49) which extends parallel to the driving direction, viewed from above, for separating the cobs or other fruit from the plant, in order to perform the process as described in one of the claims 1 or 2, characterized in that the attachable device comprises for each swath only one draw-in roller (29, 58, 66) which extends parallel to the driving direction, viewed from above, with a partial jacket (50, 69) extending downwards proceeding from the cutting slot where the partial jacket (50, 69) is preferably provided with non-moving cutting blades (67) underneath for cutting the plant, which project into the corresponding slots of the draw-in roller (29, 58, 66).

4. A harvester according to claim 3, characterized in that the partial jacketing (50, 69) has a broken edge (70) on top, which is preferably a round iron, and a guide plate (72) opposite the broken edge.

5. A harvester according to claim 3 or 4, characterized in that the partial jacketing (50, 69) has a setscrew (76) on its lower end for setting the clearance between the draw-in roller (58, 66) and the partial jacketing (50, 69).

6. A harvester according to claim 3, 4 or 5, characterized in that the harvester comprises no draw-in chain.

7. A harvester according to claim 3, 4, 5 or 6, characterized in that the harvester comprises one catch means with a worm conveyor for small cut plant parts, which is preferably mounted under a piston worm conveyor (3, 22).

8. A harvester according to claim 3, 4, 5, 6 of 7, characterized in that the harvester is inclined over the soil at an angle of about 15°.

9. A harvester according to claim 3, 4, 5, 6, 7 or 8, characterized in that the harvester comprises draw-in rotors (55), which are preferably manufactured from plastic and serve to draw-in maize which is lying on the ground.

10. A harvester according to claim 3, 4, 5, 6, 7, 8 or 9, characterized in that the harvester comprises a draw-in chain (5, 51) which drives the draw-in rotor (55).

11. A harvester according to claim 3, 4, 5, 6, 7, 8, 9 or 10, characterized in that the draw-in rollers (29, 58, 66) are disposed almost vertically with their pick slots.

12. A harvester according to claim 3, 4, 5, 6, 7, 8, 9, 10 or 11, characterized in that the draw-in rollers (29, 58, 66) comprise helical draw-in passages.

13. A harvester according to claim 3, 4, 5, 6, 7, 8, 9, 10, 11 or 12, characterized in that the harvester is of modular design, the width of the modules being adjustable for the width of the swaths by means of adaptors.

## Revendications

1. Procédé pour récolter du maïs ou d'autres fruits à grains au moyen d'un cueilleur (9), en particulier sous forme d'un appareil monté devant une moissonneuse-batteuse (1), procédé selon lequel, par le tirage vers le bas des tiges des plantes par un rouleau cueilleur, à travers une fente de cueillette (4, 23, 49) s'étendant parallèlement à la direction d'avancement, vue d'en haut, les tiges ou d'autres fruits sont séparés des plantes, caractérisé en ce que la plante n'est saisie que d'un côté et est tirée vers le bas, à travers la fente de cueillette (4, 23, 49), par seulement un rouleau cueilleur (29, 58, 66) et que la plante est amenée par le rouleau cueilleur (29, 58, 66) contre des couteaux fractionneurs fixes (67), faisant saillie dans des fentes correspondantes du rouleau cueilleur (29, 58, 66), et ainsi fractionnée.

2. Procédé selon la revendication 1, caractérisé en ce que le fractionnement est un hachage s'effectuant obliquement par rapport à la plante tirée vers le bas.

3. Cueilleur pour récolter du maïs ou d'autres fruits à grains, réalisé en particulier comme un appareil à monter à l'avant d'une moissonneuse-batteuse (1), comprenant un dispositif cueilleur et une fente de cueillette (23, 49) parallèle à la direction d'avancement, vue d'en haut, servant à séparer les tiges ou d'autres fruits de la plante, pour la mise en oeuvre du procédé selon une des revendications 1 et 2, caractérisé en ce que, pour chaque rang de plantes, il ne comprend qu'un rouleau cueilleur (29, 58, 66), parallèle à la direction d'avancement vu d'en haut, qui est pourvu d'une enveloppe partielle (50, 69), s'étendant vers le bas à partir de la fente de cueillette (4, 23, 49) et présentant en bas, des couteaux de fractionnement fixes (67), destinés au hachage de la plante et faisant saillie dans des fentes correspondantes du rouleau cueilleur (29, 58, 66).

4. Cueilleur selon la revendication 3, caractérisé en ce que l'enveloppe partielle (50, 69) présente, en haut, un bord de brisure (70), formé en particulier par un fer rond, et qu'une tôle de guidage (72) est placée en face de ce bord.

5. Appareil de récolte selon la revendication 3 ou 4, caractérisé en ce que le revêtement partiel (50, 59) présente à son extrémité inférieure une vis de réglage (76) destinée à l'ajustement de la fente située entre le tambour d'alimentation (29, 58, 66) et le revêtement partiel (50, 69).

6. Appareil de récolte selon la revendication 3, 4 ou 5, caractérisé en ce que l'appareil de récolte est conçu sans chaînes d'alimentation.

7. Appareil de récolte selon la revendication 3, 4, 5 ou 6, caractérisé en ce que l'appareil de récolte présente un dispositif de réception, disposé particulièrement sous une vis d'amenée à piston 53), avec une vis d'amenée pour les parties de plantes broyées.

8. Appareil de récolte selon la revendication 3, 4, 5, 6 ou 7, caractérisé en ce que l'appareil de récolte est incliné à un angle d'environ 15° par rapport au sol.

9. Appareil de récolte selon la revendication 3, 4, 5, 6, 7 ou 8, caractérisé en ce que l'appareil de récolte présente des rotors d'alimentation (55), particulièrement en plastique, destinés à saisir le maïs gisant à terre.

10. Appareil de récolte selon la revendication 3, 4, 5, 6, 7, 8 ou 9, caractérisé en ce que l'appareil de récolte présente une chaîne d'alimentation (5, 51) qui entraîne aussi le rotor d'alimentation (55).

11. Appareil de récolte selon la revendication 3, 4, 5, 6, 7, 8, 9 ou 10, caractérisé en ce que les tambours d'alimentation (29, 58, 66) avec leurs fentes de cueillage correspondantes sont disposés presque verticalement.

12. Appareil de récolte selon la revendication 3, 4, 5, 6, 7, 8, 9, 10 ou 11, caractérisé en ce que les tambours d'alimentation (29, 58, 66) présentent des canaux d'amenée de forme hélicoïdale.

13. Appareil de récolte selon la revendication 3, 4, 5, 6, 7, 8, 9, 10, 11 ou 12, caractérisé en ce que l'appareil de récolte est construit de façon modulaire, la largeur du module étant réglable au moyen de pièces intercalaires, en fonction de l'écartement des rangées de plantes.

Fig. 1

Fig. 2

*Fig. 3*

EP 0 091 635 B2

Fig. 4